# FASCICULE DE BREVET EUROPEEN

(11) **EP 3 512 718 B1**
(45) Date de publication et mention de la délivrance du brevet: **25.11.2020**
(21) Numéro de dépôt: 17777621.8
(22) Date de dépôt: 14.09.2017
(51) Int. Cl.: B60C 1/00, C08F 236/10, C08F 8/12, C08F 8/14, C08L 7/00, C08L 9/06, C08L 21/00

(54) **COMPOSITION DE CAOUTCHOUC COMPRENANT UN POLYMÈRE DIÉNIQUE FONCTIONNEL**
KAUTSCHUKZUSAMMENSETZUNG MIT EINEM FUNKTIONALEN DIENPOLYMER
RUBBER COMPOSITION COMPRISING A FUNCTIONAL DIENE POLYMER

(30) Priorité: 16.09.2016 FR 1658701
(43) Date de publication de la demande: 24.07.2019
(73) Titulaire: Compagnie Générale des Etablissements Michelin, 63000 Clermont-Ferrand (FR)
(72) Inventeur: GAVARD-LONCHAY, Odile, 63040 Clermont-Ferrand Cedex 9 (FR); THUILLIEZ, Anne-Lise, 63040 Clermont-Ferrand Cedex 9 (FR)
(74) Mandataire: Gandon-Pain, Sylvie
(86) Numéro de dépôt international: PCT/FR2017/052454
(87) Numéro de publication internationale: WO 2018/051022

(56) Documents cités:
- WO-A1-2016/079411
- DE-A1-102008 000 269

## Description

La présente invention concerne le domaine des compositions de caoutchouc, particulièrement destinées à être utilisées dans un article semi-fini caoutchouteux comportant des éléments de renforcement métalliques. Plus particulièrement, l'invention s'intéresse aux compositions de caoutchouc utilisables dans la fabrication de structure de renforcement ou armature de renforcement pour pneumatique de véhicules.

Les composites métal / caoutchouc, notamment pour pneumatiques, sont bien connus. Ils sont généralement constitués d'une matrice en caoutchouc diénique, réticulable, comportant des éléments de renforcement généralement sous forme de fil(s) ou d'assemblages de fils. Ils peuvent être utilisés dans un pneumatique, par exemple comme armature de carcasse radiale, telles que les nappes carcasse, les nappes sommets.

Un pneumatique à armature de carcasse radiale, de manière connue comporte une bande de roulement, deux bourrelets inextensibles, deux flancs reliant les bourrelets à la bande de roulement et une ceinture disposée circonférentiellement entre l'armature de carcasse et la bande de roulement, cette ceinture et l'armature de carcasse étant constituées de diverses nappes (ou "couches") de caoutchouc renforcées par des éléments de renforcement filaires ou renforts filaires tels que des câbles ou des monofilaments, par exemple métalliques. Une nappe de renforcement renforcée par des éléments filaires est donc constituée d'une gomme et d'éléments de renforcement qui sont noyés dans la gomme. La gomme est généralement à base d'un élastomère diénique, comme le caoutchouc naturel, d'une charge renforçante comme le noir de carbone, d'un système de réticulation à base de soufre et d'oxyde de zinc. Les éléments de renforcement sont disposés pratiquement parallèlement les uns aux autres à l'intérieur de la nappe.

Pour remplir efficacement leur fonction de renforcement de ces nappes, soumises comme on le sait à des contraintes très importantes lors du roulage des pneumatiques, les éléments de renforcement filaires métalliques doivent satisfaire à un très grand nombre de critères techniques, parfois contradictoires, tels qu'une haute endurance en fatigue, une résistance élevée à la traction, à l'usure et à la corrosion, une forte adhésion au caoutchouc environnant, et être capables de maintenir ces performances à un niveau très élevé aussi longtemps que possible.

On comprend aisément que l'adhésion entre la gomme et les éléments de renforcement filaires métalliques est donc une propriété clé pour la pérennité de ces performances.

Par exemple, le procédé traditionnel pour relier la gomme à de l'acier consiste à revêtir la surface de l'acier avec du laiton (alliage cuivre-zinc), la liaison entre l'acier et la gomme étant assurée par la sulfuration du laiton lors de la vulcanisation ou cuisson de l'élastomère présent dans la gomme. Or, on sait que l'adhésion entre l'acier et la gomme est susceptible de s'affaiblir au cours du temps, du fait de l'évolution progressive des sulfures formés sous l'effet des différentes sollicitations rencontrées, notamment mécaniques et/ou thermiques.

Par ailleurs, les éléments de renforcement métallique peuvent être faits d'un métal autre que l'acier ou être recouverts d'un métal différent de l'acier tel que l'aluminium, le cobalt, le cuivre, l'étain, le nickel, le zinc ou leurs alliages. Il est aussi d'un intérêt économique de disposer d'un matériau qui puisse adhérer non seulement à l'acier, mais aussi à d'autres métaux.

Il est aussi connu d'utiliser des systèmes adhésifs ou colles qui assurent dans les composites métal / caoutchouc une bonne liaison entre le métal et le caoutchouc. L'utilisation d'une colle passe généralement par l'application de la colle sur le métal avant la fabrication du composite. Cette opération de dépôt de colle sur le métal requiert des installations spécifiques et propres à l'application de la colle, notamment des bains, dans la chaîne de fabrication du composite. Ces installations ont l'inconvénient de prendre de la place et représentent un coût. Il peut aussi arriver que le dépôt de colle ne soit pas uniforme sur toute la surface du métal, ce qui peut entraîner des hétérogénéités dans les propriétés finales du composite. Il y a donc intérêt à supprimer le recours à une colle dans la fabrication de tels composites pour éviter ces inconvénients.

Il est donc une préoccupation constante des manufacturiers de pneumatique de trouver des compositions de caoutchouc qui non seulement présentent une bonne adhésion, mais aussi ne présentent pas les inconvénients mentionnés précédemment.

Au cours de leurs recherches, les Demanderesses ont découvert que l'introduction dans une composition de caoutchouc d'au plus 30% en masse d'un polymère diénique portant au moins une fonction acide phosphonique, hémiacide phosphonique ou diester de l'acide phosphonique permet de résoudre les inconvénients mentionnés plus haut.

De la demande de brevet WO201607911, il est connu d'utiliser un élastomère diénique portant des fonctions phosphonate ou acide phosphonique dans une composition de caoutchouc renforcée par une charge pour améliorer les interactions entre l'élastomère diénique et la charge. Mais ce document n'enseigne pas que l'introduction dans une composition de caoutchouc d'au plus 30% en masse de tels polyméres diéniques fonctionnels permet d'améliorer la liaison entre un métal et la composition de caoutchouc. DE 10 2008 000269 A1 divulgue des dispersions comprenant des copolymères diéniques comprenant des fonctions acide phosphonique utilisés comme promoteur d'adhérence entre le métal et les caoutchoucs dans des structures de pneus renforcés.

Ainsi, un premier objet de l'invention est une composition de caoutchouc à base au moins d'une matrice polymère comportant un élastomère diénique Ed et un polymère diénique fonctionnel, d'une charge renforçante et d'un système de réticulation, lequel polymère diénique fonctionnel est un polymère diénique portant au moins un groupe fonctionnel, le groupe fonctionnel étant la fonction acide phosphonique, la fonction hémiacide phosphonique, la fonction diester de l'acide phosphonique ou un sel de la fonction acide phosphonique ou hémiacide phosphonique, le polymère diénique fonctionnel représentant au plus 30% en masse de la matrice polymère et l'élastomère diénique Ed représentant plus de 50% en masse de la matrice polymère.

Un autre objet de l'invention est un article semi-fini comportant des éléments de renforcement présentant une surface métallique destinée à entrer au contact de la composition de caoutchouc, lesquels éléments de renforcement sont enrobés dans la composition de caoutchouc conforme à l'invention.
L'invention porte aussi sur un pneumatique comprenant un article semi-fini conforme à l'invention.

### I. DESCRIPTION DETAILLEE DE L'INVENTION :

Dans la présente description, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente description, sauf indication expresse différente, tous les pourcentages (%) indiqués sont des % en masse. Les taux des composés exprimés en parties sont des parties en poids.

Par l'expression composition "à base de", il faut entendre dans la présente description une composition comportant le mélange et/ou le produit de réaction in situ des différents constituants utilisés, certains de ces constituants (par exemple la matrice élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Les composés mentionnés et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges...

Dans la présente demande, les dénominations « la fonction acide phosphonique », « la fonction hémiacide phosphonique » et « la fonction diester de l'acide phosphonique » désignent respectivement les groupes fonctionnels P(O)(OH)₂, P(O)(OH)(OR), P(O)(OR)₂, R identiques ou différents, étant un groupe hydrocarboné pouvant être substitué ou interrompue par un ou plusieurs hétéroatomes.

Dans la présente demande, le mot (méth)acrylate désigne indifféremment acrylate ou méthacrylate.

On entend par matrice polymère l'ensemble des polymères (c'est-à-dire chaînes macromoléculaires) présents dans la composition de caoutchouc
La matrice polymère a pour caractéristique essentielle de comprendre un polymère diénique fonctionnel défini comme un polymère diénique qui porte au moins un groupe fonctionnel, c'est à dire un ou plusieurs groupes fonctionnels, le groupe fonctionnel étant la fonction acide phosphonique, la fonction hémiacide phosphonique, la fonction diester de l'acide phosphonique ou un sel de la fonction acide phosphonique ou hémiacide phosphonique. Le polymère diénique fonctionnel peut être un polymère élastomère ou un polymère liquide. Selon l'un quelconque des modes de réalisation de l'invention, le polymère diénique fonctionnel utile aux besoins de l'invention présente de préférence une masse molaire moyenne en nombre inférieure à 50000, en particulier comprise entre 1000 et 50000.

Selon un mode de réalisation particulier de l'invention, le polymère diénique fonctionnel porte plusieurs desdits groupes fonctionnels.

Par polymère diénique, on rappelle que doit être entendu un polymère qui comprend des unités diéniques et qui est généralement issu au moins en partie (i.e. un homopolymère ou un copolymère) de monomères diènes (monomères porteurs de deux doubles liaisons carbone-carbone, conjuguées ou non).
On entend plus particulièrement par polymère diénique tout homopolymère d'un monomère diène conjugué, tout copolymère d'un monomère diène conjugué ou leur mélange, le monomère diène conjugué ayant de 4 à 12 atomes de carbone.

A titre de diènes conjugués conviennent notamment le 1,3-butadiène, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

De préférence, le polymère diénique fonctionnel est choisi dans le groupe des polymères constitué par les polybutadiènes, les polyisoprènes, les copolymères du 1,3-butadiène, les copolymères d'isoprène et leurs mélanges. A titre de copolymères de 1,3-butadiène ou d'isoprène, on peut tout particulièrement citer ceux résultant de la copolymérisation du 1,3-butadiène ou d'isoprène avec le styrène ou un (méth)acrylate. L'homme du métier comprend bien que les polybutadiènes, les polyisoprènes, les copolymères du 1,3-butadiène, les copolymères d'isoprène en tant que polymère diénique fonctionnel utile aux besoins de l'invention portent un ou plusieurs groupes fonctionnels tels que définis précédemment.

Selon l'un quelconque des modes de réalisation de l'invention, les unités diéniques dans le polymère diénique fonctionnel représentent préférentiellement plus de 50%, plus préférentiellement plus de 70% en masse du polymère diénique fonctionnel.

Selon l'un quelconque des modes de réalisation de l'invention, le groupe fonctionnel est de préférence un groupe pendant de la chaîne polymère du polymère diénique fonctionnel.

Le groupe fonctionnel peut être en extrémité de la chaîne polymère du polymère diénique fonctionnel ou en dehors des extrémités de la chaîne polymère du polymère diénique fonctionnel. Lorsqu'il est en dehors des extrémités de la chaîne polymère du polymère diénique fonctionnel, il est pendant.

Selon un mode de réalisation particulier de l'invention, le groupe fonctionnel est exclusivement porté en extrémité de chaîne de la chaîne polymère du polymère diénique fonctionnel, en particulier sur une seule extrémité ou sur chaque extrémité de la chaîne polymère du polymère diénique fonctionnel.

Le polymère diénique fonctionnel peut être synthétisé par les méthodes connues de l'homme du métier. Par exemple, on peut citer à titre non limitatif :
- La copolymérisation radicalaire d'un 1,3-diène et d'un (méth)acrylate portant le groupe fonctionnel utile aux besoins de l'invention comme décrit dans la demande de brevet WO 2016079411, la copolymérisation pouvant être suivie d'une réaction d'hydrolyse partielle ou totale du groupe fonctionnel ;
- La copolymérisation radicalaire d'un 1,3-diène et d'un vinylphosphonate comme décrit dans le document J. Polym. Sc. 1952, 8, 255-256 ou la demande de brevet FR 1403732 ;
- La modification de polymères diéniques par phosphorylation ou par addition radicalaire d'un thiol portant le groupe fonctionnel comme décrit dans les documents respectivement Adv. Synth. Cat. 2008, 350(3), 431-438 et Polym. Bull. 1998, 41, 145-151 ;
- La modification de polymères diéniques portant en extrémité de chaine un groupe nucléophile par un composé à la fois porteur du groupe fonctionnel et porteur d'un groupe électrophile comme décrit par exemple dans la demande de brevet déposée sous le numéro FR15/62885.

La méthode de préparation du polymère diénique fonctionnel est choisie par l'homme du métier judicieusement selon que le groupe fonctionnel est en extrémité de chaîne du polymère diénique fonctionnel ou en dehors de ses extrémités de chaîne, selon la macrostructure du polymère diénique fonctionnel, notamment la valeur de sa masse molaire moyenne en nombre et de son indice de polydispersité, selon la microstructure du polymère diénique fonctionnel, notamment des teneurs respectives des liaisons 1,4-cis, 1,4-trans et 1,2 de la partie diénique du polymère diénique fonctionnel et selon que le groupe fonctionnel est la fonction acide phosphonique, hémiacide phosphonique, diester de l'acide phosphonique ou un sel de la fonction acide phosphonique ou hémiacide phosphonique.

De préférence, le groupe fonctionnel est la fonction acide phosphonique, la fonction hémiacide phosphonique ou un de leurs sels.

Selon l'un quelconque des modes de réalisation de l'invention, le radical R du groupe fonctionnel est de préférence un alkyle, de manière plus préférentielle un alkyle comportant 1 à 3 atomes de carbone, de manière encore plus préférentielle un méthyle.

Le taux de groupe fonctionnel dans le polymère diénique fonctionnel varie de préférence de 0.01 à 3 milliéquivalent par g (méq/g), plus préférentiellement de 0.15 à 2 méq/g de polymère diénique fonctionnel. Ces plages de taux peuvent s'appliquer à l'un quelconque des modes de réalisation de l'invention.

La matrice polymère a pour autre caractéristique essentielle de comprendre un autre polymère, un élastomère diénique Ed. On entend par un élastomère diénique un ou plusieurs élastomères diéniques qui se différencient les uns des autres par leur microstructure ou leur macrostructure. L'élastomère diénique Ed représente plus de 50% en masse de la matrice polymère pour conférer à la matrice polymère le caractère caoutchouteux de la composition de caoutchouc.

Par élastomère (ou indistinctement "caoutchouc", les deux termes étant considérés comme synonymes) diénique, doit être compris de manière connue un polymère diénique tel que défini plus haut pour ce qui est de sa microstructure.

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

L'élastomère diénique Ed peut être étoilé, couplé, fonctionnalisé ou non, de manière connue en soi, au moyen d'agents de fonctionnalisation, de couplage ou d'étoilage connus de l'homme du métier.

Selon l'un quelconque des modes de réalisation, l'élastomère diénique Ed est de préférence un élastomère diénique fortement insaturé, de manière plus préférentielle choisi dans le groupe des élastomères fortement insaturés constitué par les polybutadiènes, les polyisoprènes, les copolymères du 1,3-butadiène, les copolymères d'isoprène et leurs mélanges. De manière encore plus préférentielle, l'élastomère diénique Ed est un polyisoprène présentant plus de 90% en masse de liaison 1,4-cis. Mieux l'élastomère diénique est le caoutchouc naturel.

Quant au polymère diénique fonctionnel, il représente au plus 30% en masse de la matrice polymère, de préférence de 5 à moins de 30% en masse de la matrice polymère. Au-delà de 30%, on perd les propriétés intrinsèques propres à l'élastomère diénique qui confère à la composition de caoutchouc ses propriétés, telle que l'élasticité, la cohésion, le collant à cru, la cristallisation sous tension selon la microstructure et la macrostructure de l'élastomère diénique Ed. En deçà de 5%, l'amélioration des propriétés d'adhésion peut s'avérer insuffisante selon l'application envisagée de la composition de caoutchouc.

De préférence, l'élastomère diénique Ed et le polymère diénique fonctionnel représentent au moins 90% en masse de la matrice polymère. Avantageusement, la matrice polymère consiste en le polymère diénique fonctionnel et l'élastomère diénique Ed. Ces modes de réalisation respectivement préférentiel et avantageux, qui peuvent être combinés à l'un quelconque des autres modes de réalisation de l'invention, permettent d'obtenir le meilleur compromis entre les propriétés d'adhésion et les autres propriétés, notamment mécaniques, de la composition de caoutchouc.

La charge renforçante est généralement utilisée pour améliorer par exemple la cohésion ou la rigidité de la matrice polymère. La charge renforçante est une charge connue pour ses capacités à renforcer une matrice polymère contenant un polymère diénique, plus particulièrement élastomère. La charge renforçante est typiquement une charge renforçante conventionnellement utilisée dans les compositions de caoutchouc utilisable pour la fabrication de pneumatiques. La charge renforçante est par exemple une charge organique telle que du noir de carbone, une charge inorganique renforçante telle que de la silice à laquelle est associé de manière connue un agent de couplage, ou encore un mélange de ces deux types de charge. La charge renforçante est de préférence un noir de carbone.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Le taux de charge renforçante est choisi par l'homme de l'art selon l'application envisagée du composite et selon la nature de la charge renforçante, notamment de la valeur de sa surface spécifique BET. Par exemple pour une application de la composition dans le pneumatique, notamment comme structure de renforcement ou armature de renforcement dans le pneumatique, le taux de charge renforçante est préférentiellement compris dans un domaine allant de 20 parties à 80 parties pour 100 parties de la matrice polymère. En deçà de 20 parties, le renforcement de la matrice polymère peut être insuffisant. Au-delà de 80 parties, il existe un risque d'augmentation de l'hystérèse de la matrice polymère qui peut entraîner un échauffement de la composition qui peut conduire à une dégradation des performances de la composition.

La composition de caoutchouc comprend un système de réticulation de la matrice polymère. Au cours de la fabrication du composite, le système de réticulation est destiné à réagir pour causer la réticulation de la matrice polymère, en général après la mise en contact des éléments de renforcement avec la matrice polymère contenant le système de réticulation et éventuellement la charge renforçante et après sa mise en forme. La réticulation permet généralement d'améliorer les propriétés élastiques de la matrice polymère. Le système de réticulation peut être un système de vulcanisation ou être à base d'un ou plusieurs composés peroxydes, par exemple conventionnellement utilisés dans les compositions de caoutchouc utilisables pour la fabrication de pneumatique.

Le système de vulcanisation proprement dit est à base de soufre (ou d'un agent donneur de soufre) et généralement d'un accélérateur primaire de vulcanisation. A ce système de vulcanisation de base peuvent venir s'ajouter, par exemple incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine). Le soufre est utilisé à un taux préférentiel de 0.5 à 12 parties pour cent parties de la matrice polymère (pcmp), en particulier de 1 à 10 pcmp. L'accélérateur primaire de vulcanisation est utilisé à un taux préférentiel compris entre 0.5 et 10 pcmp, plus préférentiellement compris entre 0.5 et 5 pcmp. On peut utiliser comme accélérateur (primaire ou secondaire) tout composé susceptible d'agir comme accélérateur de vulcanisation des polymères diéniques, en particulier élastomères diéniques, en présence de soufre, notamment des accélérateurs du type thiazoles ainsi que leurs dérivés, des accélérateurs de types thiurames, dithiocarbamates de zinc. De préférence, on utilise un accélérateur primaire du type sulfénamide.

Lorsque la réticulation chimique est effectuée au moyen d'un ou plusieurs composés peroxydes, le ou lesdits composés peroxydes représentent de 0.01 à 10 pcmp. A titre de composés peroxydes utilisables comme système de réticulation chimique, on peut citer les acyl peroxydes, par exemple le benzoyl peroxyde ou le p-chlorobenzoyl peroxyde, les cétones peroxydes, par exemple le méthyl éthyl cétone peroxyde, les peroxyesters, par exemple le t-butylperoxyacétate, le t-butylperoxybenzoate et le t-butylperoxyphtalate, les alkyl peroxides, par exemple le dicumyl peroxyde, le di-t-butyl peroxybenzoate et le 1,3-bis(t-butyl peroxyisopropyl)benzène, les hydroperoxydes, par exemple le t-butyl hydroperoxyde.

La composition de caoutchouc peut comporter également tout ou partie des additifs usuels habituellement dispersés dans les matrices polymères contenant un polymère diénique, en particulier élastomère. Le choix des additifs et de leur taux est fait par l'homme du métier selon l'application envisagée de la composition de caoutchouc. Par exemple pour une application de la composition de caoutchouc dans le pneumatique, notamment dans une structure de renforcement ou armature de renforcement dans le pneumatique, peuvent convenir comme additifs des pigments, des agents de protection tels que cires anti-ozone, anti-ozonants chimiques, anti-oxydants, des agents plastifiants ou des agents de mise en œuvre.

La première phase non-productive et la phase productive sont des étapes de travail mécanique, notamment par malaxage, bien connues de l'homme du métier dans la fabrication des compositions de caoutchouc. La première phase non-productive se distingue généralement de la phase productive en ce que le travail mécanique s'effectue à haute température, jusqu'à une température maximale comprise entre 110°C et 190°C, de préférence entre 130°C et 180°C. La phase productive qui suit la phase non-productive, en général après une étape de refroidissement, se définit par un travail mécanique à plus basse température, typiquement inférieure à 110°C, par exemple entre 40°C et 100°C, phase de finition au cours de laquelle est incorporé le système de réticulation.

La charge renforçante, le système de réticulation et les additifs sont répartis généralement dans la matrice polymère par leur incorporation dans la matrice polymère. Par exemple, la charge renforçante peut être incorporée à la matrice polymère par un mélangeage mécanique, en particulier un malaxage thermomécanique, éventuellement en présence des additifs précédemment cités. La température de mélangeage est choisie judicieusement par l'homme du métier en fonction de la sensibilité thermique de la matrice polymère, de sa viscosité et de la nature de la charge renforçante. Le système de réticulation est incorporé à la matrice polymère typiquement à une température inférieure à la température à laquelle se produit la réticulation pour permettre sa dispersion dans la matrice polymère et la mise en forme ultérieure du composite avant la réticulation de la matrice polymère. Généralement, le système de réticulation est incorporé à la matrice polymère après l'incorporation de la charge renforçante et des autres additifs dans la matrice polymère.

La composition de caoutchouc peut être utilisée dans un article semi-fini comportant des éléments de renforcement enrobés dans la composition de caoutchouc conforme à l'invention, lesquels éléments de renforcement présentent une surface métallique destinée à entrer au contact de la composition de caoutchouc. De préférence les éléments de renforcement sont agencés généralement côte à côte selon une direction principale. Pour une application envisagée dans le pneumatique, l'article semi-fini est préférentiellement une armature de renforcement pour pneumatique, telle qu'une armature de carcasse ou une armature de sommet.

Les éléments de renforcement (aussi appelés renforts) ont pour caractéristique essentielle de présenter une surface métallique, c'est-à-dire une surface faite de métal. La surface métallique de chaque renfort peut être tout ou partie de la surface totale du renfort et est destinée à entrer au contact de la composition de caoutchouc conforme à l'invention.

Seule une partie du renfort est métallique, cette partie étant par définition de l'invention au moins constituée de la surface métallique telle que définie précédemment, ou bien c'est l'intégralité du renfort qui est métallique. De préférence la totalité du renfort est en métal.

Selon une première variante de l'invention, la surface métallique du renfort est faite d'un matériau différent du restant du renfort. Autrement dit, le renfort est fait d'un matériau qui est tout ou en partie recouvert par une couche métallique qui constitue la surface métallique. Le matériau tout ou en partie recouvert par la surface métallique est de nature métallique ou non métallique, de préférence métallique.

Selon une deuxième variante de l'invention, le renfort est fait d'un même matériau, auquel cas le renfort est fait d'un métal qui est identique au métal de la surface métallique.

Ces deux variantes s'appliquent à l'un quelconque des modes de réalisation de l'invention concernant l'article semi-fini.

Selon un mode de réalisation avantageux de l'invention, la surface métallique comprend du fer, du cuivre, du zinc, de l'étain, de l'aluminium, du cobalt ou du nickel.

Selon un mode de réalisation particulièrement préférentiel de l'invention, le métal de la surface métallique est un métal choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, le métal de la surface métallique est le fer, le cuivre, l'étain, le zinc ou un alliage comportant au moins un de ces métaux. De manière plus préférentielle, le métal de la surface métallique est l'acier, le laiton (alliage Cu-Zn) ou le bronze (alliage Cu-Sn).

Dans la présente demande, l'expression « le métal de la surface métallique est le métal ci-après désigné » revient à dire que la surface métallique est en métal ci-après désigné. Par exemple l'expression « le métal de la surface métallique est le fer » écrite plus haut signifie que la surface métallique est en fer.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Le renfort peut se présenter sous différentes formes, préférentiellement sous la forme d'un fil unitaire (monofil) ou d'un assemblage de fils, que ces fils soient tordus entre eux (par exemple, sous la forme d'un câble) ou essentiellement parallèles entre eux.

Dans l'article semi-fini et le pneumatique conformes à l'invention, le renfort se présente plus préférentiellement sous la forme d'un fil unitaire ou d'un assemblage de fils, par exemple d'un câble ou d'un toron fabriqué avec des dispositifs et procédés de câblage ou toronnage connus de l'homme du métier, qui ne sont pas décrits ici pour la simplicité de l'exposé.

Lorsque les composites de l'invention sont utilisés pour renforcer des armatures de carcasse ou de sommet de pneumatiques radiaux, les renforts utilisés sont de préférence des assemblages (torons ou câbles) de fils fins en acier au carbone ou en acier inoxydable ayant :
- une résistance en traction supérieure à 2000 MPa, plus préférentiellement supérieure à 2500 MPa, en particulier supérieure à 3000 MPa; l'homme du métier sait comment fabriquer des fils fins présentant une telle résistance, en ajustant notamment la composition de l'acier et les taux d'écrouissage final de ces fils ;
- pour un bon compromis résistance/tenue en flexion/faisabilité, un diamètre compris entre 0.10 et 0.40 mm, plus préférentiellement entre 0.10 et 0.30 mm environ lorsque le composite est destiné à renforcer une armature de carcasse, entre 0.20 et 0.40 mm environ lorsque le composite est destiné à renforcer une armature de sommet.

Chacun des modes de réalisation définissant le renfort s'applique à l'un quelconque des modes de réalisation de l'article semi-fini.

L'article semi-fini peut être fabriqué par un procédé qui comprend les étapes suivantes :
- Réaliser deux couches de la composition de caoutchouc,
- Prendre chaque élément de renforcement en sandwich dans les deux couches en le déposant entre les deux couches,
- Le cas échéant cuire.
La réalisation des couches peut se faire par calandrage. Au cours de la cuisson de l'article semi-fini, la matrice polymère est réticulée, notamment par vulcanisation ou par des peroxydes.
Lorsque l'article semi-fini est destiné à être utilisé en tant qu'armature de renforcement dans un pneumatique, la cuisson de l'article semi-fini a lieu généralement lors de la cuisson de l'enveloppe du pneumatique.

L'invention concerne la composition de caoutchouc, l'article semi-fini et le pneumatique à l'état cru (avant réticulation de la matrice polymère) ou à l'état cuit (après réticulation de la matrice polymère).

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Préparation des polymères diéniques fonctionnels utiles aux besoins de l'invention :

### Analyse RMN du proton :

L'analyse RMN du proton est utilisée pour déterminer la structure des produits synthétisés, notamment la microstructure des polymères utilisés ou synthétisés. La teneur en le groupe fonctionnel phosphonate, hémiacide phosphonique ou acide phosphonique dans le polymère diénique fonctionnel est donnée en milliéquivalent par gramme de polymère diénique fonctionnel (méq/g).
Les spectres sont acquis sur un spectromètre 500 MHz BRUKER équipé d'une sonde " large bande " BBIz-grad 5 mm. L'expérience RMN 1H quantitative, utilise une séquence simple impulsion 30° et un délai de répétition de 3 secondes entre chaque acquisition. Les échantillons sont solubilisés dans le chloroforme deutéré (CDCl₃) ou le méthanol deutéré (MeOD).

### Analyse SEC :

On utilise la chromatographie d'exclusion stérique ou SEC (Size Exclusion Chromatography) pour déterminer la macrostructure des polymères. La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.
Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.
Préparation du polymère: Il n'y a pas de traitement particulier de l'échantillon de polymère avant analyse. Celui-ci est simplement solubilisé dans du tétrahydrofuranne (THF) qui contient 1%vol. de diisopropylamine, 1%vol. de triéthylamine et 0.1%vol. d'eau distillée, à une concentration d'environ 1 g/l. Puis la solution est filtrée sur filtre de porosité 0.45µm avant injection.
Analyse SEC: L'appareillage utilisé est un chromatographe « WATERS alliance ». Le solvant d'élution est du tétrahydrofuranne qui contient 1%vol. de diisopropylamine, 1%vol. de triéthylamine. Le débit est de 0.7 ml/min, la température du système de 35°C et la durée d'analyse de 90 min. On utilise un jeu de quatre colonnes WATERS en série, de dénominations commerciales « STYRAGEL HMW7 », « STYRAGEL HMW6E » et deux « STYRAGEL HT6E ».
Le volume injecté de la solution de l'échantillon de polymère est 100 µl. Le détecteur est un réfractomètre différentiel « WATERS 2410 » et le logiciel d'exploitation des données chromatographiques est le système « WATERS EMPOWER».
Les masses molaires moyennes calculées sont relatives à une courbe d'étalonnage réalisée à partir de polystyrènes étalons commerciaux « PSS READY CAL-KIT ».

### II.1.1- par copolymérisation radicalaire d'au moins un 1,3-diène et un (méth)acrylate portant le groupe fonctionnel et le cas échéant suivie d'une réaction de monohydrolyse ou dihydrolyse selon les modes opératoires suivants :

### • Synthèse d'un polymère SBR portant des fonctions P(O)(OH)₂ : C1 :

Le polymère C1 est préparé par terpolymérisation du styrène, butadiène et du diméthyl(méthacryloyloxy)méthyl phosphonate (MAP), suivie d'une dihydrolyse des fonctions phosphonates selon les modes opératoires suivants :
Terpolymérisation : au préalable sont préparées les charges suivantes :
   Solution de ter-dodécylmercaptan (RSH) à 0.7 M dans styrène : 3.3 ml de RSH barboté et 16.7 ml de styrène sont introduits dans une bouteille de 250 ml.
   Solution de résorcinol à 100g/L :20 g de résorcinol dans 200 ml d'eau sont introduits dans une bouteille de 250 m.
   225 ml d'eau, sont introduits dans une bouteille Steinie de 750 ml. Dans une seconde bouteille de 750 ml, 1.25 g (5 pce) de chlorure d'hexadécyltriméthylammonium (CTAC) et 300 mg (1.2 pce) de K₂S₂O₈ sont introduits. Les deux bouteilles sont barbotées pendant 10min. L'eau est transvasée via une double aiguille dans la seconde bouteille. 320 µL (0.7éq/ K₂S₂O₈) de RSH à 0.7M dans le styrène, 6mL de MAP, 5.5 ml de styrène et 22 ml de butadiène sont introduits dans la bouteille. La bouteille est placée dans un bain à 40°C pendant 3h15 pour atteindre 60% de conversion. Elle est stoppée avec 2.44 ml de la solution de résorcinol à 100 g/L. Le polymère est ensuite coagulé avec un mélange acétone/méthanol 1/1 (en volume). Il est séché une nuit dans une barquette à 60°C à l'étuve. Le terpolymère est un élastomère de Mn 47800.
Dihydrolyse :
   Dans un ballon bicol, solubiliser le terpolymère [Styrène/Butadiène/MAP] dans le chloroforme (extrait sec = 13% en masse) et se placer sous agitation magnétique à température ambiante. A l'aide d'une ampoule à brome, additionner goutte à goutte le bromotriméthylsilane (2.5 équivalents par fonction -PO(OMe)₂), sous flux d'argon. A la fin de l'addition, enlever le flux d'argon et laisser sous agitation à température ambiante pendant 8 heures. En fin de réaction, laisser revenir à température ambiante, puis coaguler le terpolymère dans le méthanol. Laisser décanter, puis enlever le méthanol surnageant. Le polymère est ensuite séché à l'air libre, à température ambiante. Le rendement de synthèse est quantitatif.
   Le produit final est un élastomère de même Mn que le terpolymère avant l'hydrolyse, son taux de fonction P(O)(OH)₂ est de 1.30 méq/g.

### • Synthèse d'un polyisoprène portant des fonctions P(O)(OH)(OMe) : C2 :

Le polymère C2 est préparé par copolymérisation d'isoprène et de MAP hémihydrolysé selon le mode opératoire suivant :
Dans un réacteur autoclave (capot ouvert), introduire l'isoprène (95%mol / somme monomères), le MAP hémihydrolysé (5%mol / somme monomères), la méthyléthylcétone (MEK) (extrait sec = 45% en masse) et l'AIBN (1% mol / somme monomères). Fermer le réacteur. Se placer sous agitation mécanique et faire passer un flux d'argon ou d'azote au moyen des deux vannes d'entrée et de sortie des gaz pendant 5 minutes. Fermer les vannes et placer le réacteur à 70°C pendant 16 heures. A la fin de la polymérisation, le produit se trouve sous deux formes :
- une phase solide, qui est l'homopolymère du MAP hémihydrolysé ;
- une phase liquide, qui est le copolymère [Isoprène / MAP hémihydrolysé].
La phase liquide est séparée de la phase solide, puis simplement évaporée, car le copolymère ne coagule pas dans le méthanol. Le rendement de synthèse est de 22%.
Le produit final est un polymère liquide, son taux de fonction P(O)(OH)(OMe) est de 0.34 méq/g.

### • Synthèse d'un polyisoprène portant des fonctions P(O)(OH)(OMe) : C3 :

Le polymère C3 est préparé par copolymérisation d'isoprène et de MAP, suivie d'une monohydrolyse des fonctions phosphonates selon les modes opératoires suivants :
Copolymérisation : Dans un réacteur autoclave (capot ouvert), introduire l'isoprène (96%mol / somme monomères), le MAP (4%mol / somme monomères), le toluène (extrait sec = 65% en masse) et l'AIBN (0,5%mol / somme monomères). Fermer le réacteur. Se placer sous agitation mécanique et faire passer un flux d'argon ou d'azote au moyen des deux vannes d'entrée et de sortie des gaz pendant 5 minutes. Fermer les vannes et placer le réacteur à 70°C pendant 16 heures. En fin de polymérisation, coaguler le copolymère dans le méthanol. Laisser décanter, puis enlever le méthanol surnageant. Solubiliser le copolymère dans le THF, puis évaporer le solvant à l'évaporateur rotatif sous pression réduite. Le copolymère est un polymère liquide. Le rendement de synthèse est de 20%.
Monohydrolyse : Dans un ballon monocol, introduire le copolymère, le Nal (1.5 équivalents par fonction -PO(OMe)₂) et un mélange 50/50 en masse d'acétone/THF (extrait sec = 8% en masse). Se placer à 50°C pendant 20 heures. Le copolymère monohydrolysé sous la forme phosphonate de sodium précipite dans le milieu réactionnel (gel). Enlever la phase liquide, puis ajouter de l'acétone. Laisser sous agitation à 60°C pendant 1 heure. Enlever l'acétone surnageant, puis répéter l'opération de lavage afin d'éliminer totalement le Nal en excès. Solubiliser le copolymère dans le méthanol, ajouter de la résine amberlite IR-120 et laisser sous agitation à température ambiante pendant 1 heure afin de convertir le phosphonate de sodium en acide phosphonique. Eliminer l'amberlite par filtration. Evaporer le méthanol à l'évaporateur rotatif sous pression réduite. Le rendement de synthèse est de 85%.
   Le produit final est un polymère liquide de même Mn que le polymère avant hydrolyse, son taux de fonction P(O)(OH)(OMe) est de 0.73 méq/g.

### • Synthèse d'un polyisoprène portant des fonctions P(O)(OH)(OMe) : C4 :

Le polymère C4 est préparé par copolymérisation d'isoprène et de MAP, suivie d'une monohydrolyse des fonctions phosphonates selon les modes opératoires suivants :
Copolymérisation : Dans un réacteur autoclave (capot ouvert), introduire l'isoprène (85% mol / somme monomères), le MAP (15%mol / somme monomères), le toluène (extrait sec = 60% en masse) et l'AIBN (1%mol / somme monomères). Fermer le réacteur. Se placer sous agitation mécanique et faire passer un flux d'argon ou d'azote au moyen des deux vannes d'entrée et de sortie des gaz pendant 5 minutes. Fermer les vannes et placer le réacteur à 70°C pendant 16 heures. En fin de polymérisation, coaguler le copolymère dans le méthanol. Laisser décanter, puis enlever le méthanol surnageant. Solubiliser le copolymère dans le THF, puis évaporer le solvant à l'évaporateur rotatif sous pression réduite. Le copolymère est un polymère liquide de Mn 12500. Le rendement de synthèse est de 26%.
Monohydrolyse :
   Dans un ballon monocol, introduire le copolymère, le Nal (1.5 équivalents par fonction - PO(OMe)₂) et l'acétone (extrait sec = 13% en masse). Se placer à 50°C pendant 20 heures. Le copolymère monohydrolysé sous la forme phosphonate de sodium précipite dans le milieu réactionnel (gel). Enlever la phase liquide, puis ajouter de l'acétone. Laisser sous agitation à 60°C pendant 1 heure. Enlever l'acétone surnageant, puis répéter l'opération de lavage afin d'éliminer totalement le Nal en excès. Solubiliser le copolymère dans le méthanol, ajouter de la résine amberlite IR-120 et laisser sous agitation à température ambiante pendant 1 heure afin de convertir le phosphonate de sodium en acide phosphonique. Eliminer l'amberlite par filtration. Evaporer le méthanol à l'évaporateur rotatif sous pression réduite. Le rendement de synthèse est quantitatif.
   Le produit final est un polymère liquide de même Mn que le polymère avant hydrolyse, son taux de fonction P(O)(OH)(OMe) est de 1.76 méq/g.

### 11.1.2- par modification de polymères diéniques portant en extrémité de chaine un groupe nucléophile, en l'espèce polybutadiènes α,ω dihydroxylés, par un composé à la fois porteur du groupe fonctionnel et porteur d'un groupe électrophile,

### • le composé étant l'acide 10-carboxyldécylphosphonique (le Carboxyl C11 Phosphonic Acid) :

Dans un ballon monocol, introduire le polybutadiène α,ω dihydroxylé, le Carboxyl C11 Phosphonic Acid (2.1 équivalents par fonction hydroxy) et le toluène. Equiper le ballon d'un Dean Stark et se placer à 140°C pendant 24 heures. La réaction est auto-catalysée par l'acide phosphonique. L'eau formée au fur et à mesure de la réaction est éliminée dans le Dean Stark par formation d'un azéotrope avec le toluène (déplacement de l'équilibre réactionnel). En fin de réaction, coaguler le polybutadiène fonctionnel dans l'éthanol. Sécher le polymère par étuvage à 60°C. Les polymères M1 à M3, polymères liquides, sont synthétisés selon ce mode opératoire.

### • le composé étant l'acide 10-carboxyldécylméthylphosphonate (le Carboxyl C11 Phosphonic Acid Hémiester) :

Dans un ballon monocol, solubiliser 30.0 g de polybutadiène α,ω dihydroxylé et 5.3 g (2 éq, soit 1 éq par fonction -OH) de Carboxyl C11 Phosphonic Acid Hémiester dans 170 mL de toluène. Equiper le ballon d'un Dean-Stark et se placer sous agitation magnétique à 140°C. La conversion est totale après 8h à 140°C. En fin de réaction, éliminer le toluène par évaporation sous vide. Le produit final M4 est un polymère liquide.

Le composé, l'acide 10-carboxyldécylméthylphosphonate, utilisé dans la réaction de modification est préparé par monohydrolyse de l'acide 10-carboxyldécyldiméthylphosphonate (Carboxyl C11 Dimethyl Phosphonate) selon le protocole suivant :
Dans un ballon monocol, solubiliser 17.0 g de Carboxyl C11 Dimethyl Phosphonate dans 110 mL d'acétone. Ajouter 19.5 g (2.25 éq) d'iodure de sodium. Se placer sous agitation magnétique à 50°C pendant 16 heures. Un précipité blanc apparaît au cours de la réaction : c'est le Carboxyl C11 Phosphonic Hemiester ME sous la forme de sel de sodium. En fin de réaction, filtrer le précipité, puis le laver deux fois à l'acétone. Mettre la poudre en suspension dans 500 mL de dichlorométhane, et additionner goutte à goutte 50 mL d'acide chlorhydrique 1M afin de convertir le phosphonate de sodium en acide phosphonique. Laisser sous agitation à température ambiante pendant 2 heures, puis transvaser le mélange en ampoule à décanter. Laver la phase chlorée à l'eau claire. Sécher sur sulfate de sodium anhydre. Filtrer. Eliminer le dichlorométhane par évaporation sous vide. Le rendement de synthèse est de 60%. Le produit final est une poudre cireuse blanche ; sa structure est caractérisée par RMN1H.

Les polybutadiènes α,ω dihydroxylés utilisés sont des produits commercialisés par Cray Valley. Le tableau 1 indique la référence commerciale du polybutadiène α,ω dihydroxylé pour la préparation du polymère fonctionnel utile aux besoins de l'invention.

**Tableau 1**

| Polymère diénique fonctionnel | polybutadiène α,ω dihydroxylé |
|---|---|
| M1 | Poly Bd R-20 LM |
| M2, M4 | Krasol LBH-P 3000 |
| M3 | Poly Bd R-45 HTLO |

La nature du groupe fonctionnel des polymères fonctionnels synthétisés selon les modes opératoires décrits précédemment figurent dans le tableau 2, ainsi que la teneur en groupe fonctionnel.

**Tableau 2**

| Polymère diénique fonctionnel | M1 | M2 | M3 | M4 |
|---|---|---|---|---|
| groupe fonctionnel (méq/g) | P(O)(OH)₂ | P(O)(OH)₂ | P(O)(OH)₂ | P(O)(OH)(OMe) |
| | 0.62 | 0.53 | 0.44 | 0.49 |

### II.2-Préparation des compositions de caoutchouc :

Les compositions de caoutchouc préparées se distinguent les unes des autres par la matrice polymère, en raison de la microstructure, de la macrostructure et du taux de polymère diénique fonctionnel utilisé dans la matrice polymère. Pour toutes les compositions de caoutchouc, la matrice polymère consiste en un mélange de caoutchouc naturel et de polymère diénique fonctionnel, le polymère diénique fonctionnel représentant 5, 10, 15 ou 25% en masse de la matrice polymère selon les exemples. Le polymère diénique fonctionnel utilisé dans la matrice polymère, ainsi que son taux sont indiqués dans les tableaux 3 à 6.

Pour préparer la composition de caoutchouc, on incorpore à la matrice polymère une charge renforçante, un noir de carbone (le N326), et un système de réticulation, un peroxyde (le dicumyl peroxyde) selon le protocole décrit ci-après. Le taux de noir de carbone est de 50 parties pour 100 parties de matrice polymère, celui de peroxyde 5 parties pour 100 parties de matrice polymère.
On introduit dans un mélangeur interne (taux de remplissage final : environ 70% en volume), dont la température initiale de cuve est d'environ 60°C, successivement le caoutchouc naturel, le noir de carbone et le polymère diénique fonctionnel. On conduit alors un travail thermomécanique (phase non-productive) jusqu'à atteindre une température maximale de « tombée » de 150°C. On récupère le mélange ainsi obtenu, on le refroidit puis on incorpore au mélange le système de réticulation sur un mélangeur externe (homo-finisseur) à 30°C, en mélangeant le tout (phase productive).

### II.3-Préparation des éprouvettes :

La qualité de la liaison entre la composition de caoutchouc et le renfort est déterminée par un test dans lequel on mesure la force nécessaire pour extraire le renfort de la composition de caoutchouc réticulée. Le renfort se présente sous la forme de tronçons de fils unitaires A cette fin, on prépare des éprouvettes contenant d'une part des fils unitaires métalliques à titre de renfort présentant une surface métallique et d'autre part une composition de caoutchouc réticulée.

Les compositions de caoutchoucs décrites dans le paragraphe II.2 sont utilisées pour confectionner des éprouvettes selon le protocole suivant :
On confectionne un bloc de caoutchouc constitué de deux plaques, appliquées l'une sur l'autre avant cuisson. Les deux plaques du bloc consistent en la même composition de caoutchouc. C'est lors de la confection du bloc que les fils unitaires sont emprisonnés entre les deux plaques à l'état cru, à égale distance et en laissant dépasser de part et d'autre de ces plaques une extrémité du fil unitaire de longueur suffisante pour la traction ultérieure. Le bloc comportant les fils unitaires est alors placé dans un moule adapté aux conditions de tests visées et laissées à l'initiative de l'homme de l'art ; à titre d'exemple, dans le cas présent, la cuisson du bloc est réalisée à 160°C pendant un temps variant de 25 min à 60 min selon la composition sous pression de 5.5 tonnes.
Les fils unitaires sont des fils en acier clair (c'est-à-dire non revêtu) ou en acier recouvert de laiton ou de bronze. Leur diamètre est de 1.75 mm, excepté pour les fils bronzés pour lesquels le diamètre est de 1.30 mm ; l'épaisseur du revêtement en laiton de 200 nm à 1 µm, l'épaisseur du revêtement en bronze de 50 nm à 0.1 µm.

Pour chacune des éprouvettes ainsi préparées, les tableaux 3 à 6 indiquent :
- lequel des polymères diéniques fonctionnels C1, C2, C3, C4, M1, M2, M3 et M4 a été utilisé
- la fraction massique de polymère diénique fonctionnel dans la matrice polymère
- le métal de la surface métallique du fil unitaire.

Chaque éprouvette est référencée par un chiffre arabe, suivi d'une lettre minuscule, par exemple la. A un chiffre arabe correspond un polymère diénique fonctionnel. La lettre minuscule indique la nature du métal de la surface métallique du fil unitaire : a pour le laiton, b pour l'acier et c pour le bronze.

Les éprouvettes ainsi préparées correspondent à l'utilisation de compositions de caoutchouc conformes à l'invention.

### II.4-Résultats :

### Test d'adhésion :

A l'issue de la cuisson, l'éprouvette ainsi constituée du bloc réticulé et des fils unitaires est mise en place dans les mâchoires d'une machine de traction adaptée pour permettre de tester chaque tronçon isolément, à une vitesse et une température données (par exemple, dans le cas présent, à 100 mm/min et température ambiante).

On caractérise les niveaux d'adhésion en mesurant la force dite d'arrachement pour arracher les tronçons de l'éprouvette.

Les résultats sont exprimés en base 100 par rapport à une éprouvette témoin qui contient des fils unitaires de nature identique à l'éprouvette testée et qui contient une composition de caoutchouc, dite témoin, dont la matrice polymère consiste en du caoutchouc naturel (autrement dit la fraction massique du polymère diénique fonctionnel dans la matrice polymère est de 0% dans la composition de caoutchouc témoin). Excepté l'absence de polymère diénique fonctionnel, la composition de caoutchouc témoin est fabriquée selon le même protocole que les compositions de caoutchouc conformes à l'invention. L'éprouvette témoin est préparé selon le même protocole que les autres éprouvettes.
Une valeur supérieure à celle de l'éprouvette témoin, arbitrairement fixée à 100, indique un résultat amélioré, c'est-à-dire une force d'arrachement supérieure à celle de l'éprouvette témoin. Les valeurs des forces d'arrachement en base 100 résultant des tests effectués sur les éprouvettes sont résumés dans les tableaux 3 à 6, selon le taux de polymère diénique fonctionnel dans la matrice polymère et selon la nature des fils unitaires.

Présentant des valeurs très supérieures à 100 dans le test d'adhésion, les éprouvettes contenant une composition de caoutchouc conforme à l'invention présentent une résistance à l'arrachement fortement améliorée, aussi bien dans le cas des éléments filaires en acier qu'en laiton et en bronze, c'est-à-dire comprenant du fer, du cuivre, du zinc ou de l'étain.

L'amélioration de la résistance à l'arrachement est observée pour toutes les compositions de caoutchouc quelles que soient la microstructure et la macrostructure des polymères diéniques fonctionnels. Elle est observée dès l'introduction de 5% en masse de polymère diénique fonctionnel.

Il est aussi remarquable de noter que l'amélioration de l'adhésion entre le métal et la composition de caoutchouc est observée en l'absence de toute étape de sulfuration généralement nécessaire dans la fabrication des composites à base d'élastomère diénique et d'acier ou de laiton ou de bronze.

**Tableau 3**

| Eprouvette | 6a, 6b | 8b |
|---|---|---|
| Fraction massique 5% | M2 | M4 |
| laiton | 380 | |
| acier | 2420 | 1340 |

**Tableau 4**

| Eprouvette | 6a, 6b | 8b |
|---|---|---|
| Fraction massique 15% | M2 | M4 |
| laiton | 420 | |
| acier | 2720 | 1700 |

**Tableau 5**

| Eprouvette | 1b | 2a, 2b | 3a, 3b, 3c | 4a et 4b | 5a, 5b | 6a, 6b, 6c | 7a, 7b |
|---|---|---|---|---|---|---|---|
| Fraction massique 10% | C1 | C2 | C3 | C4 | M1 | M2 | M3 |
| laiton | | 1240 | 640 | 360 | 380 | 880 | 580 |
| acier | 1320 | 2920 | 1880 | 2920 | 2720 | 1880 | 3180 |
| bronze | | | 1040 | | | 1820 | |

**Tableau 6**

| Eprouvette | 2a, 2b | 3a, 3b | 4a, 4b | 5a, 5b | 6a, 6b | 7a, 7b | 8b |
|---|---|---|---|---|---|---|---|
| Fraction massique 25% | C2 | C3 | C4 | M1 | M2 | M3 | M4 |
| laiton | 1920 | 1180 | 500 | | 2020 | 1440 | |
| acier | 4000 | 4200 | 4640 | 2820 | 2200 | 2600 | 2020 |

## Revendications

1. Composition de caoutchouc à base au moins d'une matrice polymère comportant un élastomère diénique Ed et un polymère diénique fonctionnel, d'une charge renforçante et d'un système de réticulation, lequel polymère diénique fonctionnel est un polymère diénique portant au moins un groupe fonctionnel, le groupe fonctionnel étant la fonction acide phosphonique, la fonction hémiacide phosphonique, la fonction diester de l'acide phosphonique ou un sel de la fonction acide phosphonique ou hémiacide phosphonique, **caractérisée en ce que** le polymère diénique fonctionnel représente au plus 30% en masse de la matrice polymère et l'élastomère diénique Ed représente plus de 50% en masse de la matrice polymère.

2. Composition de caoutchouc selon la revendication 1 dans laquelle le polymère diénique fonctionnel porte plusieurs groupes fonctionnels définis à la revendication 1.

3. Composition de caoutchouc selon l'une quelconque des revendications 1 à 2 dans laquelle le groupe fonctionnel est en extrémité de la chaîne polymère du polymère diénique fonctionnel.

4. Composition de caoutchouc selon l'une quelconque des revendications 1 à 3 dans laquelle le groupe fonctionnel est exclusivement porté en extrémité de chaîne de la chaîne polymère du polymère diénique fonctionnel, en particulier sur une seule extrémité ou sur chaque extrémité de la chaîne polymère du polymère diénique fonctionnel.

5. Composition de caoutchouc selon l'une quelconque des revendications 1 à 3 dans laquelle le groupe fonctionnel est pendant et en dehors des extrémités de la chaîne polymère du polymère diénique fonctionnel.

6. Composition de caoutchouc selon l'une quelconque des revendications 1 à 5 dans laquelle le taux de groupe fonctionnel dans le polymère diénique fonctionnel est de 0.01 à 3 milliéquivalents par gramme, méq/g, préférentiellement de 0.15 à 2 méq/g de polymère diénique fonctionnel.

7. Composition de caoutchouc selon l'une quelconque des revendications 1 à 6 dans laquelle le polymère diénique fonctionnel est choisi dans le groupe des polymères constitué par les polybutadiènes, les polyisoprènes, les copolymères du 1,3-butadiène, les copolymères d'isoprène et leurs mélanges.

8. Composition de caoutchouc selon l'une quelconque des revendications 1 à 7 dans laquelle la fonction hémiacide phosphonique et la fonction diester de l'acide phosphonique sont respectivement de formules P(O)(OH)(OR) et P(O)(OR)₂, dans lesquelles R, identiques ou différents, représentent un alkyle, de préférence un alkyle comportant 1 à 3 atomes de carbone, de manière plus préférentielle un méthyle.

9. Composition de caoutchouc selon l'une quelconque des revendications 1 à 8 dans laquelle l'élastomère diénique Ed est un polyisoprène présentant plus de 90% en masse de liaison 1,4-cis, de préférence le caoutchouc naturel.

10. Composition de caoutchouc selon l'une quelconque des revendications 1 à 9 dans laquelle le polymère diénique fonctionnel représente de 5 à moins de 30% en masse de la matrice polymère.

11. Composition de caoutchouc selon l'une quelconque des revendications 1 à 10 dans laquelle l'élastomère diénique Ed et le polymère diénique fonctionnel représentent au moins 90% en masse de la matrice polymère.

12. Composition de caoutchouc selon la revendication 11 dans laquelle la charge renforçante est un noir de carbone.

13. Composition de caoutchouc selon l'une quelconque des revendications 1 à 12 dans laquelle le taux de charge renforçante est compris dans un domaine allant de 20 parties à 80 parties pour 100 parties de la matrice polymère.

14. Article semi-fini comportant des éléments de renforcement présentant une surface métallique destinée à entrer au contact de la composition de caoutchouc, lesquels éléments de renforcement sont enrobés dans la composition de caoutchouc définie à l'une quelconque des revendications 1 à 13, l'article semi-fini étant de préférence une armature de renforcement pour pneumatique.

15. Pneumatique comprenant un article semi-fini défini à la revendication 14.

## Patentansprüche

1. Kautschukzusammensetzung auf Basis mindestens einer Polymermatrix, die ein Dien-Elastomer Ed und ein funktionelles Dien-Polymer aufweist, eines verstärkenden Füllstoffs und eines Vernetzungssystems, wobei es sich bei dem funktionellen Dien-Polymer um ein Dien-Polymer handelt, das mit mindestens einer funktionellen Gruppe versehen ist, wobei es sich bei der funktionellen Gruppe um die Funktion Phosphonsäure, die Funktion Hemi-Phosphonsäure, die Funktion Phosphonsäurediester oder ein Salz der Funktion Phosphonsäure oder Hemi-Phosphonsäure handelt, **dadurch gekennzeichnet, dass** das funktionelle Dien-Polymer höchstens 30 Massen-% der Polymermatrix ausmacht und das Dien-Elastomer Ed mehr als 50 Massen-% der Polymermatrix ausmacht.

2. Kautschukzusammensetzung nach Anspruch 1, wobei das funktionelle Dien-Polymer mit mehreren funktionellen Gruppen gemäß der Begriffsbestimmung in Anspruch 1 versehen ist.

3. Kautschukzusammensetzung nach einem beliebigen der Ansprüche 1 bis 2, wobei die funktionelle Gruppe sich am Ende der Polymerkette des funktionellen Dien-Polymers befindet.

4. Kautschukzusammensetzung nach einem beliebigen der Ansprüche 1 bis 3, wobei die Polymerkette des funktionellen Dien-Polymers ausschließlich an ihrem Kettenende mit der funktionellen Gruppe versehen ist, insbesondere an einem einzigen Ende oder an jedem der Enden der Polymerkette des funktionellen Dien-Polymers.

5. Kautschukzusammensetzung nach einem beliebigen der Ansprüche 1 bis 3, wobei die funktionelle Gruppe sich einseitig gebunden und außerhalb der Enden der Polymerkette des funktionellen Dien-Polymers befindet.

6. Kautschukzusammensetzung nach einem beliebigen der Ansprüche 1 bis 5, in welcher der Gehalt an funktionellen Gruppen in dem funktionellen Dien-Polymer 0,01 bis 3 Milliäquivalente pro Gramm, mÄ/g, vorzugsweise 0,15 bis 2 mÄq/g, an funktionellem Dien-Polymer, beträgt.

7. Kautschukzusammensetzung nach einem beliebigen der Ansprüche 1 bis 6, wobei das funktionelle Dien-Polymer aus der Gruppe von Polymeren ausgewählt ist, welche aus den Polybutadienen, den Polyisoprenen, den Copolymeren von 1,3-Butadien, den Copolymeren von Isopren sowie deren Mischungen besteht.

8. Kautschukzusammensetzung nach einem beliebigen der Ansprüche 1 bis 7, wobei die Funktion Hemi-Phosphonsäure und die Funktion Phosphonsäurediester den Formeln P(O)(OH)(OR) beziehungsweise P(O)(OR)₂ entsprechen, in welchem R, das vollkommen gleichartig oder verschiedenartig sein kann, jeweils für ein Alkyl, vorzugsweise für ein Alkyl mit 1 bis 3 Kohlenstoffatomen, mit dem größten Vorzug für ein Methyl steht.

9. Kautschukzusammensetzung nach einem beliebigen der Ansprüche 1 bis 8, wobei es sich bei dem Dien-Elastomer Ed um ein Polyisopren handelt, das mehr als 90 Massen-% an 1,4-cis-Bindungen aufweist, vorzugsweise um natürlichen Kautschuk.

10. Kautschukzusammensetzung nach einem beliebigen der Ansprüche 1 bis 9, wobei das funktionelle Dien-Polymer von 5 bis weniger als 30 Massen-% der Polymermatrix ausmacht.

11. Kautschukzusammensetzung nach einem beliebigen der Ansprüche 1 bis 10, wobei das Dien-Elastomer Ed und das funktionelle Dien-Polymer mindestens 90 Massen-% der Polymermatrix ausmachen.

12. Kautschukzusammensetzung nach Anspruch 11, wobei es sich bei dem verstärkenden Füllstoff um eine Rußsorte handelt.

13. Kautschukzusammensetzung nach einem beliebigen der Ansprüche 1 bis 12, wobei der Gehalt an verstärkendem Füllstoff im Bereich von 20 Teilen bis 80 Teilen auf 100 Teile der Polymermatrix liegt.

14. Halbzeug, das Verstärkungselemente aufweist, die über eine Metalloberfläche verfügt, welche dazu bestimmt ist, mit der Kautschukzusammensetzung in Kontakt zu kommen, wobei die Verstärkungselemente mit der Kautschukzusammensetzung überzogen sind, wie sie in einem beliebigen der Ansprüche 1 bis 13 definiert ist, wobei es sich bei dem Halbzeug vorzugsweise um ein verstärkendes Gerüst für einen Luftreifen handelt.

15. Luftreifen, der ein Halbzeug gemäß der Begriffsbestimmung in Anspruch 14 umfasst.

## Claims

1. Rubber composition based at least on a polymer matrix comprising a diene elastomer Ed and a functional diene polymer, on a reinforcing filler and a on a crosslinking system, which functional diene polymer is a diene polymer bearing at least one functional group, the functional group being the phosphonic acid function, the phosphonic hemiacid function, the phosphonic acid diester function or a salt of the phosphonic acid or phosphonic hemiacid function, **characterized in that** the functional diene polymer represents at most 30% by weight of the polymer matrix and the diene elastomer Ed represents more than 50% by weight of the polymer matrix.

2. Rubber composition according to Claim 1, in which the functional diene polymer bears several functional groups defined in Claim 1.

3. Rubber composition according to either one of Claims 1 and 2, in which the functional group is at the end of the polymer chain of the functional diene polymer.

4. Rubber composition according to any one of Claims 1 to 3, in which the functional group is exclusively borne at the chain end of the polymer chain of the functional diene polymer, in particular on a single end or on each end of the polymer chain of the functional diene polymer.

5. Rubber composition according to any one of Claims 1 to 3, in which the functional group is pendent and not on the ends of the polymer chain of the functional diene polymer.

6. Rubber composition according to any one of Claims 1 to 5, in which the functional group content in the functional diene polymer is from 0.01 to 3 milliequivalents per gram, meq/g, preferably from 0.15 to 2 meq/g of functional diene polymer.

7. Rubber composition according to any one of Claims 1 to 6, in which the functional diene polymer is selected from the group of polymers consisting of polybutadienes, polyisoprenes, 1,3-butadiene copolymers, isoprene copolymers and mixtures thereof.

8. Rubber composition according to any one of Claims 1 to 7, in which the phosphonic hemiacid function and the phosphonic acid diester function have respectively the formulae P(O)(OH)(OR) and P(O)(OR)₂, in which R, which may be identical or different, represent an alkyl, preferably an alkyl comprising 1 to 3 carbon atoms, more preferentially a methyl.

9. Rubber composition according to any one of Claims 1 to 8, in which the diene elastomer Ed is a polyisoprene having more than 90% by weight of 1,4-cis bonding, preferably natural rubber.

10. Rubber composition according to any one of Claims 1 to 9, in which the functional diene polymer represents from 5% to less than 30% by weight of the polymer matrix.

11. Rubber composition according to any one of Claims 1 to 10, in which the diene elastomer Ed and the functional diene polymer represent at least 90% by weight of the polymer matrix.

12. Rubber composition according to Claim 11, in which the reinforcing filler is a carbon black.

13. Rubber composition according to any one of Claims 1 to 12, in which the reinforcing filler content is within a range extending from 20 parts to 80 parts per 100 parts of the polymer matrix.

14. Semi-finished article comprising reinforcing elements having a metal surface intended to come into contact with the rubber composition, which reinforcing elements are coated in the rubber composition defined in any one of Claims 1 to 13, the semi-finished article preferably being a tyre reinforcement layer.

15. Tyre comprising a semi-finished article defined in Claim 14.
